Europäisches Patentamt

European Patent Office

Office européen des brevets

(11) Publication number: **0 383 608**
**A1**

# EUROPEAN PATENT APPLICATION

(21) Application number: **90301664.0**

(22) Date of filing: **15.02.90**

(51) Int. Cl.⁵: **F16D 65/12**

(30) Priority: **16.02.89 GB 8903536**

(43) Date of publication of application:
**22.08.90 Bulletin 90/34**

(84) Designated Contracting States:
**DE FR GB**

(71) Applicant: **LUCAS INDUSTRIES public limited company**
**Great King Street**
**Birmingham, B19 2XF West Midlands(GB)**

(72) Inventor: **Price, Anthony George**
**14 Meadow Lane, Croesyceiliog**
**Cwmbran, Gwent NP44 2EY, Wales(GB)**
Inventor: **Bruce, John Williams**
**Wallnut Tree Cottage, Bettys Newydd**
**Nr. Usk, Gwent NP5 1JY, Wales(GB)**

(74) Representative: **Spall, Christopher John et al**
**BARKER, BRETTELL & DUNCAN 138 Hagley Road**
**Edgbaston Birmingham B16 9PW(GB)**

(54) Improvements in rotatable friction members for vehicle disc brakes and disc brakes incorporating them.

(57) The rotatable friction members (2) of a disc brake which are brought into engagement with stationary braking surfaces (1,3') in the brake housing (3) are rigidly splined to a shaft (5) to be braked at their central portions (21), but have annular outer portions (20) which engage the braking surfaces (1,3') which are connected to the central portions (21) by connecting portions (22) which enable the friction members (2) to be compliant in that the outer portions (20) can move axially relative to the central portions (21). This helps to compensate for misalignment of pressure plates (7,8) or braking surfaces (1,3') and reduces noise and vibration. The friction members (2) may have connecting portions (22) made flexible by making them thinner, or by perforating them with apertures (36;40). Alternatively the outer portion (20) may be provided on a separate outer member (20') splined to an inner member (21') which is in turn splined to the shaft (5).

FIG.2.

# IMPROVEMENTS IN ROTATABLE FRICTION MEMBERS FOR VEHICLE DISC BRAKES AND DISC BRAKES INCORPORATING THEM

This invention relates to disc brakes for vehicles of the kind in which a rotatable friction member in a housing is keyed to a shaft to be braked, and the friction member is adapted to be brought into engagement with a relatively stationary braking surface provided in the housing by means of a pressure plate, actuating means being provided to initiate application of the brake by moving the pressure plate axially into engagement with the rotatable friction member which is thereby urged into engagement with the brake surface. Brakes as described above will hereinafter be referred to as "of the kind set forth".

The invention is concerned with improving rotatable friction members for brakes of the kind set forth, and with brakes of the kind set forth incorporating the improved rotatable friction members.

Brakes of the kind set forth may be self-energising and may comprise a pressure plate centred in the housing by stationary pilot lugs in the housing, balls or rollers being located in co-operating oppositely inclined recesses in adjacent faces of the pressure plate and a reaction member provided adjacent the pressure plate, application of the brake being initiated by moving the pressure plate angularly, the pressure plate then moving relatively axially into engagement with the friction disc which is thereby urged into engagement with the radial surface, and the pressure plate thereafter being carried round with the friction disc to provide self-energising, or servo, action.

Such self-energising brakes may be dry or they may be of the liquid cooled type, and such brakes are commonly used in tractors and like vehicles. Heavy duty brakes are often of the multiplate type having interleaved sets of rotatable friction members and relatively stationary members provided with braking surfaces.

Known brakes of the kind set forth are subject to problems of noise and vibration produced during braking, particularly when the brake is a heavy duty brake which has to absorb a great deal of energy. The vibrations produced in the brakes of a vehicle can produce poor "feel" characteristics at the brake pedal. These are undesirable from the point of view of the driver of the vehicle who is concerned to be able to sense how his brakes are performing through the "feel" of the pedal.

We believe that the problems of vibration and noise during braking may be due at least in part to uneven application of the brake due to the pressure plate, or braking surface, not being quite parallel with the rotatable friction member, or members. This produces axial stresses in the rotatable friction members.

Even if the pressure plate or friction member is able to tilt a little way in response to the uneven application there is still a delay before the rotatable friction member fully contacts the braking surface. In order to overcome problems associated with inaccurate alignment of the pressure plate, or braking surface, with the friction member manufacturing tolerances have been made very strict so that misalignment is very unlikely. This makes manufacture of the brakes expensive.

We are aware of proposals to improve the flow of cooling fluid in disc brakes by providing the rotatable friction members with slots extending completely through the material of the rotatable members; an example of such a proposal is disclosed in British Patent No. 2 141 193.

According to a first aspect of the invention in a a disc brake of the kind set forth the rotatable friction member comprises a central portion keyed to the shaft to be braked, an annular outer portion adapted to be urged in use substantially axially directly towards the braking surface by a generally axial force generated by the pressure plate and acting directly at the outer portion, and a connecting portion connecting the outer portion to the central portion and which, in use, permits the connecting portion relative axial movement to take place between the outer portion and the central portion in a direction transverse to the plane of the rotatable friction member.

A friction member is compliant to a slightly misaligned pressure plate or braking surface since the outer portion is not rigidly attached to the central portion (which is constrained by its splining to the shaft). A flexible connecting portion allows the friction member to compensate for any misalignments and to adapt itself to a configuration to achieve full contact with the braking surface over the entire area of the outer portion more quickly than hitherto. This reduces the noise and vibration produced during braking and improves the "feel" characteristics of the brake.

Since full engagement of the friction member with the braking surface occurs earlier than otherwise would be the case the performance and efficiency of the brake is improved.

A further improvement in the performance of the brake arises from the fact that when the outer portion of the friction member is urged axially it does not in the first moments of its movement have to drag the extra mass of the central portion with it in order to move axially: the connecting portion allows it to move a little way relatively independently. Since the braking clearances in brakes are not usually very large this slight time saving in the movement of the outer portion may allow the brake to be actuated a little faster.

A further advantage of the invention is that manufacturing tolerances can be relaxed since the friction discs are now compliant to their surroundings and can compensate for any slight inaccuracies in alignment.

Preferably the connecting portion is flexible, at least in the axial direction. The central, outer and connecting portions may be formed from a single plate, with the connecting portion comprising a weakened portion of the plate. The connecting portion may comprise a region of the plate that is thinner than the outer portion or central portion, or both portions.

A recess may be provided in the plate between the central and outer portions in order to make the connecting portion flexible. The recess may be an annular recess centred on the axis of the shaft to be braked. The plate may have more than one recess, and may have superimposed recesses one to either side of the plate.

The connecting portion may comprise a region of the friction member that is perforated by holes passing completely through the friction member. The holes may be segments of an annulus separated by radially extending spokes which connect the central portion to the outer portion. The holes may be radially inside the inner peripheral edge of the outer portion and may be radially inside a friction lining carried by the outer portion.

The spokes may be divided into parallel spoke members by at least one elongate aperture provided in the spoke. The elongate aperture may extend into the outer portion.

In an alternative construction of the friction member the outer portion may comprise a separate outer member splined to an inner member comprising the central portion, the connecting portion comprising the splining between the two members and permitting relative axial movement between the inner and outer member. The splines of one of the members may have a greater axial length than those of the other members. One of the members may be of thicker material than the other member.

The friction member may carry a friction lining. Preferably a pair of superimposed friction linings is provided on the friction member, one to either side of the member.

According to a second aspect of the invention a rotatable friction member for a disc brake of the kind set forth comprises a central portion adapted to be keyed to the shaft to be braked, an annular outer portion adapted to be urged in use towards braking surface substantailly in an axial direction, and a connection portion connecting the outer portion to the central portion.

Figure 1 shows a self-energising disc brake in accordance with the second aspect of the invention;

Figure 2 is a cross-section on line 2-2 of Figure 1;

Figures 3 to 5 are diametral cross-sections of three rotatable friction members in accordance with the first aspect of the invention; and

Figures 6 and 7 show plan views of two further rotatable friction members in accordance with the first aspect of the invention.

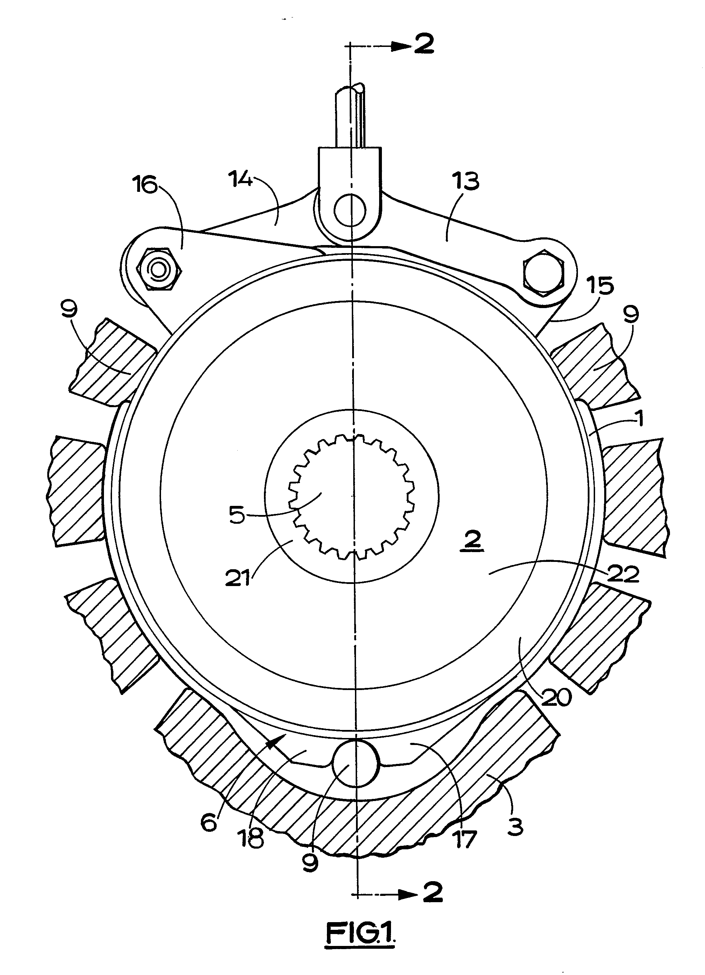

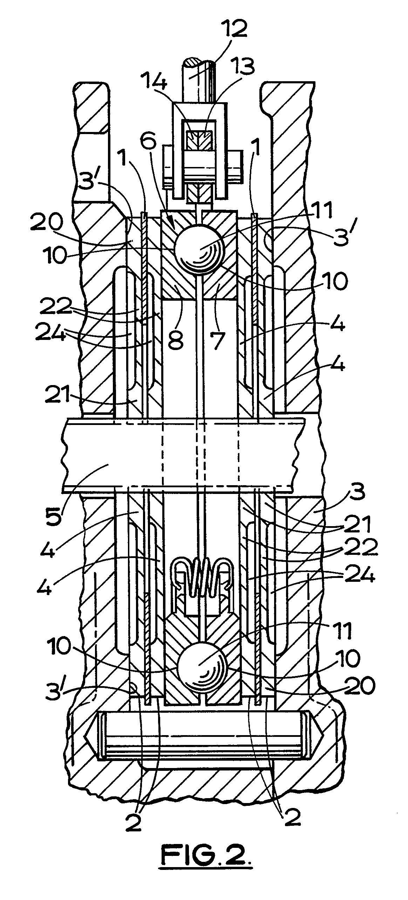

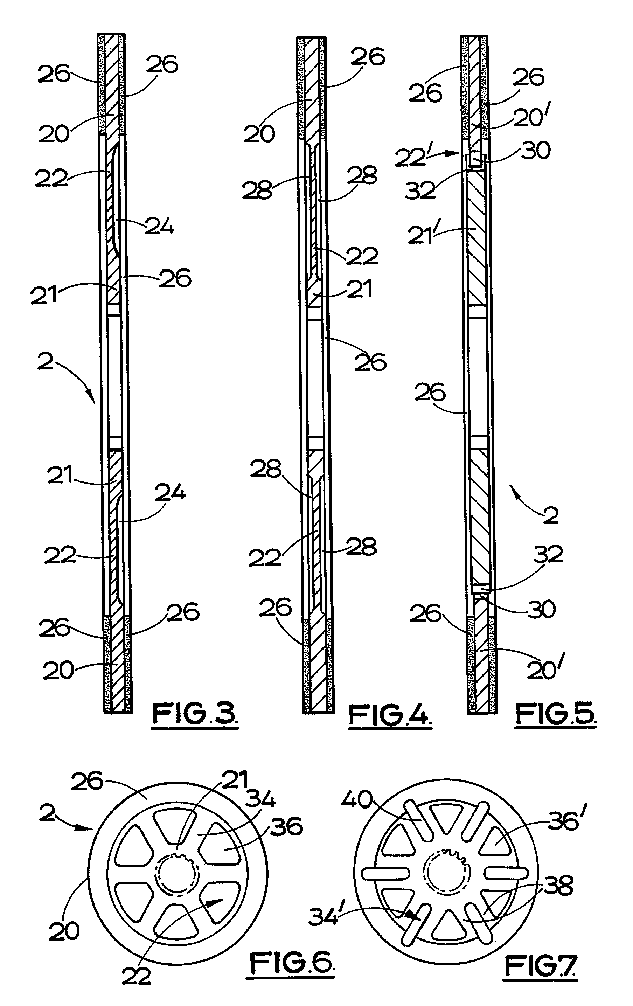

An oil-immersed brake of the multi-plate type is illustrated in Figures 1 and 2 of the accompanying drawings and comprises sets of relatively stationary and rotatable friction members 1 and 2 which are alternatively interposed within a common housing 3. Each rotatable member 2 is a rotatable friction disc which is adapted to be brought into engagement with a braking surface provided in the housing either on the stationary members 1 or by the housing itself. The braking surfaces defined by the housing are provided by opposed annular wall regions 3'. All the braking members 1, 2 comprise annular discs of which the stationary members 1 are keyed to the housing 3 at their outer peripheral edges for relative sliding movement. This keying is illustrated in Figure 1. The stationary members 1 have lugs which co-operate with the pilot lugs 9 to prevent angular movement of the stationary members 1. However, the arrangement of the engagement of the members 1 with the lugs is such that they can slide axially in the housing. The rotatable members 2 are slidably splined to a shaft 5 to be braked. Each stationary member 1 comprises a planar steel plate which may be slotted to prevent coning, and each rotatable member 2 comprises a steel plate 4. The embodiment of Figures 1 and 2 does not have linings of friction material, but it will be apparent that friction linings can be provided if desired (see Figures 3 to 7).

An actuator assembly 6 is disposed between a pair of adjacent rotatable members 2, for example replacing a stationary plate. The actuator assembly 6 comprises a pair of pressure plates 7, 8 which are centred on pilots lugs 9 in the housing and are provided in adjacent faces with angularly spaced recesses 10 in complementary pairs of oppositely inclined recesses in which balls 11 are housed. In such an arrangement each of the pressure plates is the reaction member to the other pressure plate.

A pull-rod 12 is coupled to the inner ends of a pair of toggle links 13, 14 of which the outer ends are coupled to respective radial lugs 15, 16 on the two pressure plates 7 and 8.

The application of the brake is initiated by the pull-rod 12 which withdraws the toggle links 13, 14 to move the pressure plates angularly in the housing 3 in opposite directions. This causes the pressure plates 7 and 8 to separate axially by the balls 11 running up ramps defined by the walls of the recesses 10. The balls are located in a deeper part of each recess 10 when the brake is not applied than when the brake is applied. The action of the balls moving to a shallower part of the recesses means that the recesses, and hence the pressure plates, are forced further apart axially. Rotational movement of the pressure plates 7 and 8 relative to each other thus causes them to move axially apart to engage their respective friction discs, provided by rotatable members 2, that are adjacent the pressure plates, thereby urging each of those discs into engagement with their respective adjacent stationary member. Each stationary member 1 provides a stationary braking surface with which each friction disc is moved into engagement. Since the stationary and rotatable friction member 1,2 are axially mobile this tends to clamp the two sets of friction members 1, 2 together, and the engagement of the pressure plates 7,8 with the rotatable members 2 causes the two pressure plates 7,8 to be carried round with the members 2 until the movement of one of them is arrested by a stop abutment in the housing 3, suitably defined by the engagement with a lug 17,18 on that plate with a respective pilot 9. The engagement of the other plate with its adjacent friction disc acts so as to continues to carry the other plate around to produce a servo or self-energising action. This increases separation of the pressure plates 7,8 to enhance the braking force.

The brake could of course include a hydraulic actuator to urge the pressure plates in opposite circumferential directions to apply the brake.

The friction discs 2 comprise metal plates having an annular outer portion 20, and annular central portion 21, and an annular connecting portion 22 which connects the outer portion 20 to the central portion 21. The central portion 21 of each disc is rigidly splined to the shaft 5 and the outer portion 20 is disposed directly between the region of the pressure plates which define the recesses 10 and the annular wall regions 3' of the housing. The outer and central portions 20,21 of the discs 2 are of the same uniform thickness. The connecting portion 22 is of reduced thickness, being about half of the thickness of the central and outer portions. The connecting portion of reduced thickness extends from immediately radially inwards of the wall regions 3' of the housing to the central portion 21 adjacent the shaft 5, for about half of the radius of the disc 2 in all.

The connecting portion 22 may be formed by machining an annular recess 24 into one face of a plate of uniform thickness, or it may be cast integrally into the disc. The thinner material of the connecting portion gives the friction discs a degree of flexibility which enables them to be more compliant to their surroundings.

When the brake of Figures 1 and 2 is applied the pressure plates 7 and 8 are urged towards the wall regions 3' of the housing 3 by the balls 11 riding up ramps defined in the recesses 10. An axial force is transmitted directly through the outer portions 20 and urges them into engagement with the braking surfaces on the stationary plates 1 or the wall region 3'. Frictional contact between the rotating friction discs 2 and the braking surfaces retard the outer portions 20. The connecting portions 22 transmit the retarding torque through the planes of the discs to the central portions 21 where the keying of the central portions to the shaft 5 transmits the retarding torque to the shaft 5, braking it.

If the engagement of the pressure plates 7,8 with the friction discs 2 were not quite normal, or the engagement of the friction discs 2 with the braking surfaces were not true, the friction discs would experience a force tilting or twisting them transversely of the shaft 5. If the discs were rigid this tilting force, applied at a specific region relative to the housing 3, would cause excessive juddering or vibration of the discs. However, since the discs are compliant their outer portions 20 can flex in the axial direction relative to their central portions 21 because of the connecting portion 22.

Because the outer portions 20 can flex, the brake can achieve substantially full braking contact over the entire surface of the outer portions 20 in circumstances where it would otherwise have had only partial braking contact over a limited area. This reduces vibrations and noise, and improves the efficiency of the brake. Furthermore, it speeds up full braking contact in circumstances where previously the discs would have taken longer to achieve it since the outer portions 20 of the discs can move relatively independently of their central portions 21 and different regions of the outer portion of a single friction disc can move axially relative to each other.

The friction discs and braking surfaces will wear more evenly due to the evening-out of braking forces.

Although the outer portions 20 of the discs are shown without friction linings this is largely for the purposes of illustration. In practice they will probably carry friction linings.

Figure 3 shows a friction disc similar to those shown in Figure 1 and 2, but having annular linings 26 of friction material provided on opposite sides of the outer portion 20. Similar reference numerals have been used for similar structures. The friction linings 26 extend radially for substantially the whole extent of the annular outer portion 20. The recess 24 extends to a region of the disc adjacent the friction lining.

The disc 2 of Figure 4 is similar to that of Figure 3, but has two superimposed annular recesses 28, provided one to either side of its connecting portion 22. The recesses 28 are shallower than recess 24 of the disc of Figure 3, each being about one third of the thickness of the metal plate which constitutes the disc 2. The connecting portion 22 is thus also about one third of the thickness of metal plate. The recesses 28 extend closer to the splines of the disc than does the recess 24.

It will be appreciated that the recesses 24 and 28 in the above embodiments need not be the specific depths stated, but could be any suitable desired depth. The recesses 28 of a plate need not both be the same depth.

The friction disc 2 shown in Figure 5 comprises an annular outer member 20' connected to an annular inner, or central, member 21' by connecting means 22'. The connecting means 22' comprises splines 30 provided at the inner peripheral edge of the outer member 20' which cooperate with complementary splines 32 provided at the outer peripheral edge of the inner member 21' to enable the outer member 20' to move axially of the inner members 21'. The inner member 21' is made of substantially thicker metal plate than is the outer member 20', and the splines 32 therefore have a longer axial length than the splines 30.

In use, the outer member 20' can slide axially of the inner member 21'. The splining of the outer member to the inner member may be relatively loose to enable the outer member to tilt or twist transversely of the axial direction whilst the inner member remains rigidly keyed to the shaft to be braked.

Figures 6 and 7 show an alternative way of making the friction discs compliant: the discs are made more flexible by the presence of holes extending completely through the discs. The friction disc 2 of Figure 6 comprises a metal plate of uniform thickness which carries a pair of superimposed annular friction linings 26 on opposite sides of its outer portion 20 and is keyed to a shaft to be braked at its inner portion 21. The disc has a connecting portion 22 which comprises six equiangularly spaced radially extending spokes 34 which connect the outer portion 20 to the inner portion 21 and define equi-angularly spaced holes 36 between them. Each hole 36 is a segment of a common annulus on which the holes lie. The width of the spokes 34 is about the same as the circumferential extent of the radially inward arc which part-defines the holes 36. The radially outward arcs which part-define the holes 36 lie on a circle spaced slightly radially inwards of the radially inner peripheral edge of the friction linings 26.

The friction disc of Figure 7 is similar to that of Figure 6, except that its spokes 34' are wider so that the holes 36' are arcuately smaller and each defines a segment comprising one sixth of a circle. Furthermore, each spoke 34' is divided into two parallel spoke members 38 by a radially extending slot 40 which passes completely through the metal plate which forms the disc. The slots 40 extend radially from their inner end at the circle upon which the inner ends of the holes 36' lie to their outer end which is about half way across the annular linings 26. The width of each slot 40 is about one third of the width of the spokes 34' and is provided at the centre of its spoke 34' so that the spoke member 38 are of about the same width as the slot 40.

It is also envisaged that friction discs may have both thinned regions and holes extending completely through them.

**Claims**

1. A disc brake for vehicles in which a rotatable friction member (2) in a housing (3) is keyed to a shaft (5) to be braked, and the friction member is adapted to be brought into engagement with a relatively stationary braking surface (3') in the housing by means of a pressure plate (7, 8), actuating means (10, 11, 12) being provided to initiate application of the brake by moving the pressure plate axially into engagement with the rotatable friction member which is thereby urged into engagement with the braking surface, characterised in that the rotatable friction member (2) comprises a central portion (21) keyed to the shaft to be braked, an annular outer portion (20) adapted to be urged in use towards the braking surface substantially in an axial direction by a generally axial force generated by the pressure plate and acting directly at the outer portion, and a connecting portion (22) connecting the outer portion to the central portion and which, in use, permits relative axial movement to take place between the outer portion and the central portion in a direction transverse to the plane of the rotatable friction member.

2. A disc brake according to claim 1, characterised in that the outer portion (20) is not rigid with the central portion (21).

3. A disc brake according to claim 1 or claim 2, characterised in that the central portion (21), the outer portion (20) and the connecting portion (22) are formed from a single plate.

4. A disc brake according to claim 3, characterised in that the connecting portion (22) comprises a region of the plate that is thinner than either the outer portion (20) or the central portion (21).

5. A disc brake according to claim 3, characterised in that the connecting portion (22) is thinner than both the outer portion (20) and the central portion (21).

6. A disc brake according to any of claims 3-5, characterised in that the connecting portion (22) comprises a region of the friction member (2) that is perforated by holes (36) passing completely through the friction member (2).

7. A disc brake according to claim 1 or claim 2, characterised in that the outer portion (20) and the central portion (21) comprise separate members (20′, 21′), and a sliding coupling (30, 32) between the two members defines the connecting portion.

8. A disc brake according to claim 7, characterised in that the sliding coupling comprises a splined connection between the inner edge of the outer member (20′) and the outer edge of the central member (21′).

9. A disc brake according to any preceding claims, characterised in that a friction lining (26) is provided on at least one side of the outer portion (20, 20′) of the friction member.

10. A disc brake according to any of claims 1-8, characterised in that a friction lining is provided on each side of the friction member.

11. A rotatable friction member for a disc brake according to any preceding claim, characterised in that the friction member (2) comprises a central portion (21) adapted to be keyed to the shaft (5) to be braked, an annular outer portion (20) adapted to be urged in use towards a braking surface substantially in an axial direction, and a connecting portion (22) connecting the outer portion to the central portion.

**FIG.1.**

FIG.2.

FIG.3. FIG.4. FIG.5.

FIG.6. FIG7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | DE-A-2 043 911 (SIEMENS AG) * page 2, lines 25-29; figures 3,4 * | 1,2 | F 16 D 65/12 |
| A | EP-A-0 291 429 (CARBONE INDUSTRIE) * abstract; figures 1-3 * | 7 | |
| D,A | GB-A-2 141 193 (LUCAS INDUSTRIES) | | |
| A | DE-B-2 524 803 (GIRLING LTD.) | | |

TECHNICAL FIELDS SEARCHED (Int. Cl.5)

F 16 D

The present search report has been drawn up for all claims

| Place of search | Date of completion of the search | Examiner |
|---|---|---|
| BERLIN | 10-04-1990 | LUDWIG H J |

EPO FORM 1503 03.82 (P0401)